# EUROPEAN PATENT APPLICATION

(11) **EP 1 022 569 A1**
(43) Date of publication of application: **26.07.2000**
(21) Application number: 99830016.4
(22) Date of filing: 19.01.1999
(51) Int. Cl.: G01P 13/00, H01H 35/40, F24D 19/10

(54) **A magnetically operated liquid flow detector and a hydraulic group incorporating the same**

(71) Applicant: FUGAS s.r.l., I-20090 Trezzano sul Naviglio (Milan) (IT)
(72) Inventor: Fugazza, Giuseppe, 20090 Trezzano S/N (Milano) (IT)
(74) Representative: Robba, Pierpaolo

(57) **Abstract**

A magnetically operated flow detector for liquids comprises a housing (11;30) inside which a piston (14) is movable due to the flow of the liquid to be detected, a permanent magnet (16) disposed inside said housing (11) and a magnetic sensor (19;32) disposed outside said housing and adapted to be actuated by the magnetic field of said permanent magnet (16).

The permanent magnet (16) has a toroidal shape and is mounted at a fixed location, whereas the piston (14) carries a cylinder (18) of a magnetic material disposed inside the magnet, that offers a lower reluctance path to the field lines of said magnet (16). The device can be integrated in a hydraulic group for system supplying both heating and sanitary hot water, comprising a three-way valve controlled by a linear electric actuator.

## Description

The present invention relates to magnetically operated devices for detecting the flow of liquids.

The invention further relates to the use of such a detector in a hydraulic group for supplying both sanitary hot water and heating water in domestic systems. The invention will be illustrated with particular reference to its use in a hydraulic group as disclosed in EP-A 0 568 122 in the name of the present applicant but this particular application is not to be considered as limiting the invention scope.

A flow detector is a device adapted to detect the passage of a fluid, particularly a liquid within a duct.

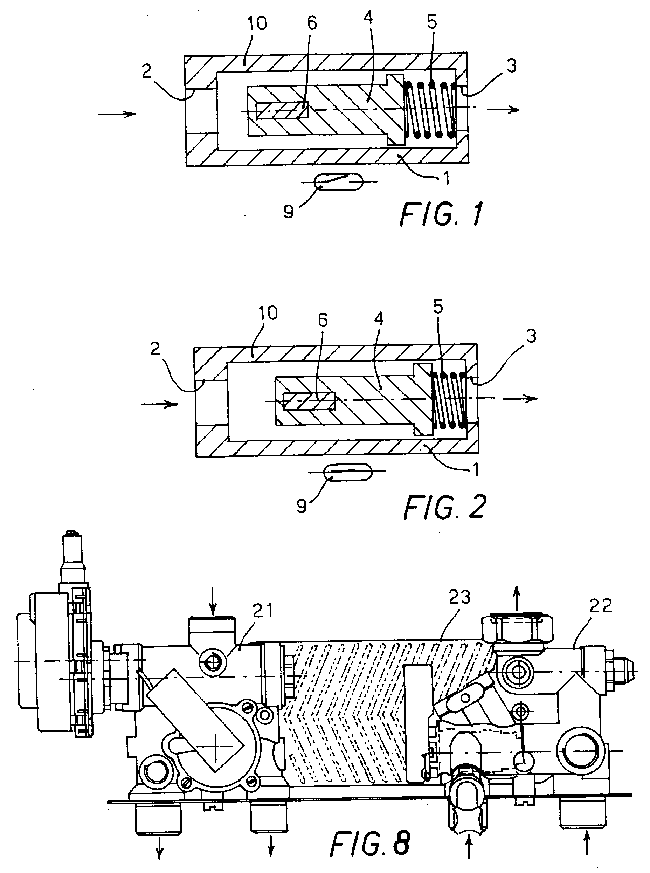

As schematically shown in Figures 1 and 2, the known magnetic flow detectors provide a duct length or housing 1, open at both ends (holes 2 and 3) for allowing a liquid flow, containing a permanent magnet 6 carried by a centered piston 4 that is longitudinally positioned by a helicoidal spring 5. The piston 4 is axially movable inside the housing, and a sensor 9 of the magnetic field is fitted outside the housing, schematically shown in the Figures as a pair of contacts in a capsule of a reed switch (dry reed switch).

The piston, and therefore the permanent magnet, is maintained in the rest position shown in Fig. 1 (in the absence of flow or in presence of a flow rate lower than a set intervention threshold) by the spring 5, or by the force of gravity in other (not shown) arrangements.

Under the effect of flow of fluid, the piston is moved along the flow direction, approaching the sensor, until it reaches the position shown in Fig. 2 where the magnetic field generated by the permanent magnet 6 reaches the minimum threshold for actuating the sensor 9, in the illustrated condition a field level capable to close the contacts in the capsule.

US-A-5 002 090 discloses a flow detector of the above mentioned type, further comprising a second magnet in a fixed position, but in which the sensor is anyhow actuated by the movable magnet.

These known devices has several drawbacks and design limitations. As an example, in order to achieve the desired strength of the magnetic field using a small size magnet, it is necessary to use expensive ferromagnetic materials (cobalt-samarium, neodymium alloys, etc.).

As an alternative, thin walls and/or expensive machining operations are necessary that complicate and increase the cost of the detecting device since, because of the construction arrangement, the distance of the sensor from the housing axis can be increased only by increasing the magnet size (generally of cylindrical shape). Although this solution allows for a larger spacing of the sensor and solves some construction problems, it has nevertheless the drawback of increasing the size of the piston-magnet assembly, increasing the flow resistance.

In hydraulic groups of combined system for producing heating and sanitary hot water, it has recently been suggested to use a linear actuator for controlling the three-way valve, such actuator being driven by a flow detector sensing the request of sanitary hot water. In such a group, either realized as a one-piece assembly or as a two-components assembly, the above discussed problems are further worsened. Moreover, when using the conventional sensors that are generally mounted in cylindrical containers having a 4-7 mm. diameter and with the rheophores (or the small output cable) directly fitted to the sensor, the assembling is far from being optimum.

It is an object of the present invention to overcome the above discussed drawbacks and limitations, and more particularly to realize a magnetic flow detector for liquids in which the sensor can be kept relatively away from the magnet, in a favourable operating position, and the magnet is not required to generate a strong field.

The invention accomplishes these objects through a flow detector for liquids as claimed in claim 1.

Further advantageous features are recited in the dependent claims.

The invention will now be disclosed with reference to the attached drawings illustrating preferred but non limiting embodiments thereof, in which:
Figures 1 and 2, already discussed, schematically illustrate the construction and the working of a flow detector of the prior art;
Figures 3 and 4 illustrate a preferred embodiment of a flow detector according to the invention;
Figures 5 and 6 illustrate the operation of the flow detector according to the invention;
Fig. 7 illustrates a preferred embodiment of a flow detector according to the invention, incorporated in a depressional component, and used in a hydraulic group of known type;
Fig. 8 shows a hydraulic group incorporating a flow detector according to the invention.

In the Figures the same numeral references have been used to indicate equal - or at least operatively equivalent parts.

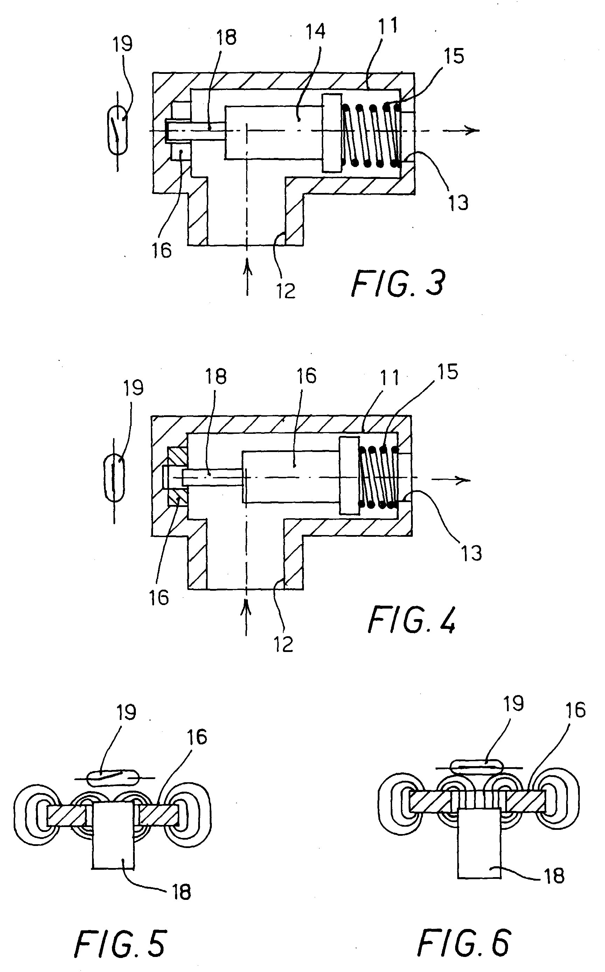

With reference to the drawings, the device illustrated in Figures 3 and 4 comprises a substantially cylindrical housing 11, provided with a radial inlet opening or hole 12 and an axial outlet opening or hole 13. Inside the housing, a floating member or piston 14, e.g. of cylindrical shape, is axially movable under the effect of the liquid flow from the opening 12 towards the opening 13, when such flow overcomes the force of a helicoidal spring 15.

A permanent magnet 16, of toroidal shape, is fixedly mounted inside the housing 11, in correspondence of the housing blind end, with the direction of the magnetic field being orthogonal to its flat surfaces. A suitable magnetic sensor 19, e.g. a reed capsule or a Hall sensor, is fitted outside such housing, near the permanent magnet 16.

At the end opposite to the one contacting the spring, the piston 14 carries a cylinder of a magnetic material 18, this expression meaning a material having a relative magnetic permeability µr >= 300. In the rest condition illustrated in Fig. 3, the cylinder 18 is inserted in the central hole of the magnet 16. The magnetic material cylinder, for example of stainless steel, and however with a relative magnetic permeability not lower than 300, offers a lower reluctance path to the magnetic field lines, i.e. to the magnetic flow generated by such magnet.

As schematically shown in Fig. 5, in the rest position of the piston - with the cylinder 18 inside the toroidal magnet - the field lines gather in the cylinder inner space so that the magnetic field near the sensor 19 becomes too weak to actuate the sensor (i.e. closing the contacts in the illustrated embodiment). In the present description, the term "magnetic material" means a material having a relative magnetic permeability µr >= 300.

When the flow through the housing 11 is large enough to axially shift the piston 14, as shown in Fig. 4, the cylinder of magnetic material moves (at least partially) out of the hole in the permanent magnet 16, and the permeability of the liquid occupying such space brings about a different configuration of the magnetic field. In this situation, schematically illustrated in Fig. 6, there is an gathering (that is an increased number of lines for a given area) of the field lines in the space of the sensor that is actuated.

Thus the small cylinder 8 behaves like a sort of magnetic shunt, capable of altering the distribution of the magnetic lines of force (magnetic flux) of the field generated by the magnet, without requiring a displacement of this latter. In the illustrated arrangement the sensor is located along the magnet axis, i.e. in position that better exploits the characteristics of the magnet.

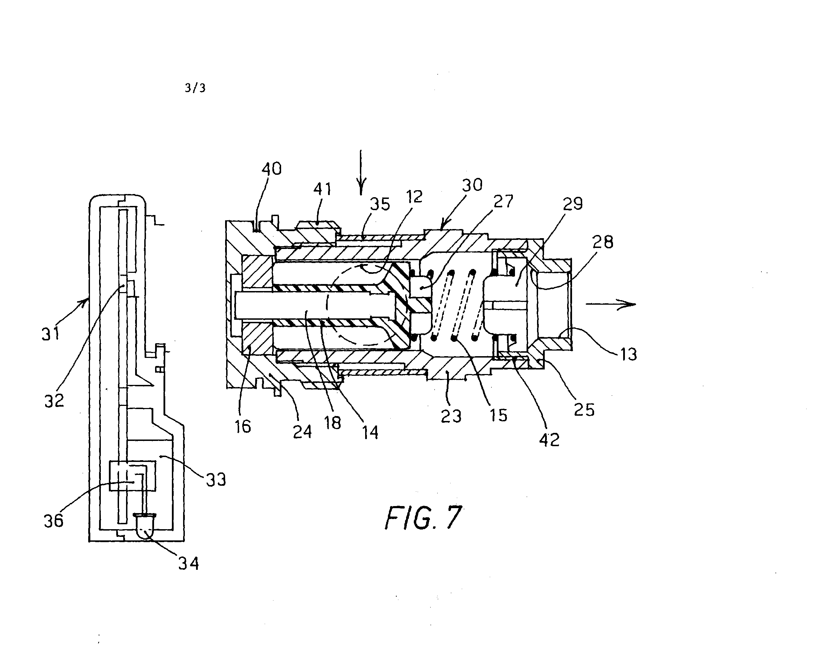

With reference to Figures 7 and 8 it is now illustrated the use of the flow detector according to the invention in a hydraulic group.

The hydraulic group shown in Fig. 8 without limiting purposes, is of the type disclosed in the above mentioned European patent No. 568 122 and comprises two subgroups 21, 22 and a water/water heat exchanger 23. Such group comprises a depressional member or choker, adapted a create a pressure drop when sanitary hot water is being supplied, for generating an electric signal to start the motor (or other linear actuator) that drives the three-way valve. Additional details concerning the construction and the operation of the hydraulic group can be found in the description of the above mentioned European patent.

As shown in the cross-section view of Fig. 7, the depressional component comprises a portion 30, to be inserted into the hydraulic group, and a box-like portion 31 carrying the sensor, the associated electric circuitry, etc..

Portion 30 is formed by a metal body 23 having a generally cylindrical shape at the ends of which a plug 24 and a plug 25 are respectively mounted. The first plug 24 is screwed on the body 23, houses the toroidal magnet 16 and is provided with a groove 40 for quick mounting the box-like portion 31. Portion 30 can be fastened to the hydraulic (sub)group through an outer thread 41.

The second plug 25 forms the outlet opening 13 of the flow detector, in which there can be provided - if required - a seat for a device regulating or limiting the flow rate, and contains a centering member 29 while the water inlet 12 is located radially. The plug 25 is secured to the body 23 by means of a thread 42.

Within the metal body 23 there are housed a piston 14 of a plastic material and a rod 18 of a magnetic material. More particularly, in the illustrated embodiment, the piston is shaped like a hollow cylindrical body, provided at one end with a centering member 27, and housing the rod 18 of magnetic material, e.g. of a AISI 430 F steel. A spring 15, that is housed in the body 23, engages the centering end of the piston 14 while another centering member 29 is fitted in the plug 25. A filter 35, formed as a cylindrical net, is mounted between the end of the plug 24 and a shoulder in relief of the body 23.

Advantageously, as shown in Fig. 7, a flare or tapering is provided between the portion of body 23 housing the piston and the portion of larger diameter containing the spring. This way the flow resistance caused by the passage of the water are minimized.

The box-like portion 31 is preferably formed of a plastic material, shaped like a flattened body and provided with snap means for engaging the groove 40. The sensor 32 is centrally mounted on the portion 31 so that by fitting the box-like portion onto the portion 30, the sensor is automatically positioned in a precise axial location with respect to the permanent magnet 16.

Portion 31 further carries a connector 33, a LED diode 34 and a printed circuit board 36 carrying the circuitry of the device.

Thanks to the illustrated arrangement, the accidental detachment of the portion 31 (forming the connection to the electric motor) from the detector prevents the actuation of the motor.

The device according to the invention overcomes the design limitations previously imposed in respect of the size and the weight of the magnet by the conventional arrangements in which the magnet was movable. This way it is possible to increase the magnet size without causing drawbacks such as a throttling of the duct or an increase of the piston weight that would lead to an increase of the friction between piston and the cylindrical seat.

A further advantage of the detector according to the invention consists in that large changes of the flow rate can be accommodated by small displacements of the piston, and therefore the switching of the sensor can be accomplished with very short piston displacements. For example, in a device according to the invention a reliable switching can be achieved with a piston stroke of 2-3 mm, as compared with the 10-12 mm strokes of the conventional flow detectors.

In a group mounting a device according to the invention, an irregularity or a defective fastening of the sensor, at worst results in the sensor not being actuated, and in most faulty situations the sensor will indicate a condition of "no flow", thus avoiding a consent to the three-way valve actuation that might lead to dangerous situations.

In the illustrated, embodiments the piston is maintained in the rest position by a spring rather than by the force of gravity, however the illustrated embodiment is not to be construed as limiting the invention scope and other different configurations thereof are possible as it will be evident to the skilled of the art.

## Claims

1. A magnetically operated flow detector for liquids, comprising:
a housing (11; 30), provided with an inlet opening (12) and an outlet opening (13);
a piston (14), movable inside said housing (11; 30) under the action of the liquid flow from said inlet opening (12) towards said outlet opening (13);
a spring (15) adapted to oppose said piston displacement;
a permanent magnet (16) inside said housing (11; 30);
a magnetic sensor (19; 32), disposed outside said housing and responsive to the magnetic field of said permanent magnet (16);
characterized in that said permanent magnet (16) is mounted in a fixed position on said housing (11, 30), and that the displacement of said piston (14) alters the distribution of the magnetic lines of force of said magnet (16).

2. A flow detector as claimed in claim 1, characterized in that said piston (14) carries a component of a magnetic material (18) that is movable as a result of said piston displacement.

3. A flow detector as claimed in claim 2, characterized in that said permanent magnet (16) has a toroidal shape, and in that said component (18) of a magnetic material is cylindrical and coaxially disposed inside said toroidal magnet (16).

4. A flow detector as claimed in the preceding claims, characterized in that said housing (11; 30) has a substantially cylindrical shape, inside which said piston (14) is axially movable.

5. A flow detector as claimed in claim 4, characterized in that said housing (30) comprises a metal body (23) of generally cylindrical shape and a first and a second end plug (24, 25), and in that said magnet (16) is carried by a box-like portion (31) adapted to be coupled with one (24) of said plugs in which said permanent magnet (16) is housed.

6. A flow detector as claimed in claim 5, characterized in that said first end plug (24) is screwed over said cylindrical body (23) and formed with a groove (30) for the snap fastening of said box-like portion (31).

7. A flow detector as claimed in claim 5, characterized in that said second end plug (25) forms the outlet opening (13) of the detector and contained a centering member (29) for said spring (15), whereas said inlet opening (12) is radially disposed.

8. A flow detector as claimed in claim 6 characterized in that in said second plug (25) a seat is formed for a device adapted to limit the flow rate.

9. A flow detector as claimed in the preceding claims, characterized in that a printed circuit board (36) 9containing the device circuitry and a connector (33) are provided in said box-like portion (31).

10. A flow detector as claimed in the preceding claims, characterized in that the relative magnetic permeability µr of said magnetic material is not lower than 300.

11. A hydraulic group for systems providing both heating and sanitary hot water, comprising a three-way valve controlled by a linear electric actuator, characterized in that it incorporates a flow detector according to any of claims 1 to 10.
